# NEUE EUROPÄISCHE PATENTSCHRIFT

(11) **EP 3 481 647 B2**
(45) Veröffentlichungstag und Bekanntmachung des Hinweises auf die Entscheidung über den Einspruch: **17.12.2025**
(45) Hinweis auf die Patenterteilung: 28.10.2020
(21) Anmeldenummer: 17722797.2
(22) Anmeldetag: 11.05.2017
(51) Int. Cl.: B29D 30/02, B60C 19/08, B29D 30/52, B60C 7/00

(54) **VOLLGUMMIREIFEN**
SOLID TIRE
PNEU PLEIN

(30) Priorität: 08.07.2016 DE 102016212509
(43) Veröffentlichungstag der Anmeldung: 15.05.2019
(73) Patentinhaber: Continental Reifen Deutschland GmbH, 30175 Hannover (DE)
(72) Erfinder: SCHMIDT, Peter, 31275 Lehrte (DE); MÜLLER, Matthias-Stephan, 30827 Garbsen (DE); MINX, Carsten, 31535 Neustadt (DE); HEINRICH, Nikolas, 30823 Garbsen (DE); HALLMANN, Steffen, 30171 Hannover (DE)
(74) Vertreter: Pelster Behrends Patentanwälte PartG mbB
(86) Internationale Anmeldenummer: PCT/EP2017/061331
(87) Internationale Veröffentlichungsnummer: WO 2018/007061

(56) Entgegenhaltungen:
- EP-A1- 3 750 699
- EP-A2- 0 787 604
- DE-C- 820 543
- DE-C1- 10 154 454
- DE-U- 1 993 828

## Beschreibung

Die Erfindung betrifft ein Fahrzeugreifen, welcher ein Vollgummireifen ist und mindestens ein Reifenbauteil eine nichtkreidende Gummimischung umfasst, wobei der Fahrzeugreifen einen in radialer Richtung äußeren Reifenbauteil aus einer nichtkreidenden und elektrisch nicht leitfähigen Gummimischung und einen in radialer Richtung untersten elektrisch leitfähigen Reifenbauteil aufweist. Der Gegenstand der Erfindung ist in den Ansprüchen definiert.

Flurförderfahrzeuge weisen, eingesetzt in sogenannten Non-Marking Anwendungen, in der Regel Vollgummireifen auf, die nicht elektrisch leitfähig sind.

Dadurch kann es aufgrund von plötzlichen Spannungsentladungen zu einem Ausfall der Fahrzeugelektronik kommen. In der Folge bleibt das Flurförderfahrzeug stehen und muss unter Umständen erst einmal in eine Werkstatt gebracht werden.

Aus der DE 820 543 A ist ein Fahrzeugluftreifen mit einer elektrisch leitfähigen Gummischicht auf zumindest einer der beiden Seitenflächen des Reifens bekannt. Die DE 101 54 454 C1 betrifft einen Vollgummireifen mit einem Reifengrundkörper aus einer elektrisch leitenden, Ruß enthaltenden Gummimischung und mit einem mit der Fahrbahn in Berührung tretenden Laufflächenteil aus einer hellen Gummimischung, die elektrisch nicht leitfähig ist, wobei an einigen Stellen der Laufflächenteil von der Gummimischung des Reifengrundkörpers durchsetzt wird, um derart einen Kontakt der leitenden Gummimischung mit der Fahrbahn herzustellen. Die EP 0 787 604 A2 offenbart einen Vollgummireifen, in welchem zumindest ein elektrisch leitfähiger, streifenförmiger Polymerpfropfen eingebracht ist, welcher innerhalb des Reifens zwischen dem Laufstreifen, hier von dessen Außenseite ausgehend, bis zur metallischen Felge verläuft. Das nachveröffentlichte Dokument EP 3 750 699 A1, welches am 16. Dezember 2020 veröffentlicht wurde, offenbart eine Methode zur Herstellung von Vollreifen und einen entsprechenden Vollreifen.

Der Erfindung liegt die Aufgabe zugrunde, einen Fahrzeugreifen bereitzustellen, bei dem insbesondere bei Flurförderfahrzeugen berreift mit Non-Marking-Vollgummireifen eine elektrische Ableitfähigkeit zum Fahrbahnuntergrund sichergestellt wird.

Gelöst wird die Aufgabe gemäß dem Oberbegriff und den kennzeichnenden Merkmalen von Anspruch 1.

Ein Vorteil der Erfindung ist insbesondere darin zu sehen, dass mit der neuartigen Reifenkonstruktion eine elektrische Ableitfähigkeit des Reifens zum Fahrbahnuntergrund sichergestellt wird. Dadurch kann es nicht mehr zu plötzlichen Spannungsentladungen kommen, die zum Ausfall der Fahrzeugelektronik des Flurförderfahrzeuges führen können. Das Seitenwandbauteil mit der elektrisch leitfähigen Gummmischung ist ausschließlich im Bereich der Seitenwand angeordnet. Durch die horziontale Materialschicht mit einer elektrisch leitfähigen Gummimischung wird die elektrische Ableitfähigkeit verbessert, da insbesondere die Kontaktfläche wesentlich vergrößert wird. Die restlichen Reifenbauteile des Vollgummireifen-Laustreifens bestehen aus einer nichtkreidenden und hellen Gummimischung. Der Vollgummireifen weist im Wesentlichen eine helle Laufstreifenmischung auf, die gegenüber einem hellen Fahrbahnuntergrund keine dunklen Markierungen hinterlässt. Bei Non-Marking-Vollgummireifen kommen i.a. helle Gummimischungen zum Einsatz, die keine Markierungen auf dem Fahrbahnoberfläche hinterlassen können.

In einer vorteilhaften Weiterbildung der Erfindung ist vorgesehen, dass das Seitenwandbauteil mit der elektrisch leitfähigen Gummimischung auf der fahrzeuginneren Seite angeordnet ist.

Dadurch weist die fahrzeugäußere Seite des Vollgummireifens eine nichtkreidende Gummimischung auf. Das Erscheinigungsbild der Fluorförderfahrzeuge wird dadurch gegenüber herkömmlichen Fluorförderfahrzeugen nicht verändert.

In einer weiteren vorteilhaften Weiterbildung der Erfindung ist vorgesehen, dass auf beiden Seiten des Fahrzeugreifens jeweils ein Seitenwandbauteil mit einer elektrisch leitfähigen Gummimischung angeordnet ist.

Dadurch wird die Ableitfähigkeit des Vollgummireifens wesentlich verbessert.

In einer weiteren vorteilhaften Weiterbildung der Erfindung ist vorgesehen, dass das Seitenwandbauteil eine mit Rußmaterial gefüllte Mischung ist mit der die elektrische Leitfähigkeit gewährleistet wird.

Dadurch wird auf einfache Weise eine hohe elektrische Ableitfähigkeit gewährleistet.

In einer weiteren vorteilhaften Weiterbildung der Erfindung ist vorgesehen, dass das Seitenwandbauteil einen elektrischen Ableitwiderstand von kleiner als zehn Millionen Ohm aufweist.

Dadurch wird gewährleistet, dass das Seitenwandbauteil eine ausreichende elektrische Ableitfähigkeit aufweist.

Erfindungsgemäß ist vorgesehen, dass der Fahrzeugreifen ein Stahlbodenbandagen-Reifen ist, wobei das unterste elektrisch leitfähige Reifenbauteil eine Stahlbodenbandage ist.

In einer nicht erfindungsgemäßen Weiterbildung ist vorgesehen, dass der Fahrzeugreifen ein Superelastic-Reifen ist, wobei das unterste elektrisch leitfähige Reifenbauteil eine Gummimischung mit Russmaterial umfasst.

Anhand mehrerer Ausführungsbeispiele soll die Erfindung näher erläutert werden. Es zeigen:

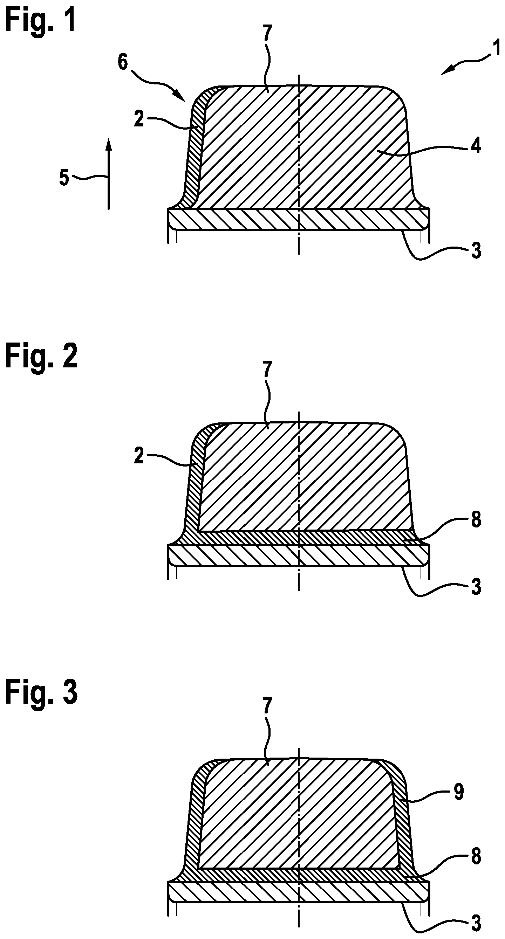

Fig. 1 bis 9: unterschiedliche Ausführungsbeispiele

Die Ausführungsbeispiele gemäss den Figuren 1 und 4 bis 9 zeigen weitere Reifen die nicht unter den Schutzumfang der Erfindung fallen.

Die Figur 1 zeigt ein Ausführungsbeispiel.

Bei diesem Ausführungsbeispiel handelt es sich um Stahlbodenbandagen-Industriereifen in einer Querschnittansicht. Das unterste elektrisch leitfähige Reifenbauteil ist bei diesem Reifen die Stahlbodenbandage 3. Das äußere Reifenbauteil 4 besteht aus einer nichtkreidenden und einer elektrisch nicht leitfähigen Gummimischung, die im Wesentlichen eine helle Farbe aufweist. Auf der fahrzeuginneren Seite des Fahrzeugreifens ist das Seitenwandbauteil 2 angeordnet, welches eine elektrisch leitfähige Gummimischung mit Rußmaterial aufweist. Das Seitenwandbauteil 2 erstreckt sich von der Oberseite 7 des Stahlbodenbandagen-Reifens 1 bis zur Oberseite der Stahlbodenbandage 3. Dadurch wird eine sichere elektrische Ableitfähigkeit zum Fahrbahnuntergrund gewährleistet. Der Fall 5 zeigt die radiale Richtung des Fahrzeugreifens bzw. Vollgummireifens.

Ausführungen des Laufstreifens mit zwei Komponenten bzw. Gummimischungen sind ebenfalls möglich, analog der Ausführung einen Superelastic-Reifens.

Die Fig. 2 zeigt ein weiteres Ausführungsbeispiel für einen Stahlbodenbandagen-Reifen. Oberhalb der Stahlbodenbandage 3 ist eine horizontale Materialschicht 8 mit einer elektrisch leitfähigen Gummimischung angeordnet. Die horizontale Materialschicht 8 ist mit dem elektrisch leitfähigen Seitenwandbauteil 2 verbunden und gewährleistet eine optimale Ableitfähigkeit für den Fahrzeugreifen.

Ausführungen des Laufstreifens mit zwei Komponenten bzw. Gummimischungen sind ebenfalls möglich, analog der Ausführung einen Superelastic-Reifens.

Die Fig. 3 zeigt ein weiteres Ausführungsbeispiel für einen Stahlboden-Bandagenreifen. Bei diesem Ausführungsbeispiel weist ebenfalls die fahrzeugäußere Seite des Reifens einen Seitenwandbauteil 9 mit einer elektrisch leitfähigen Gummimischung auf.

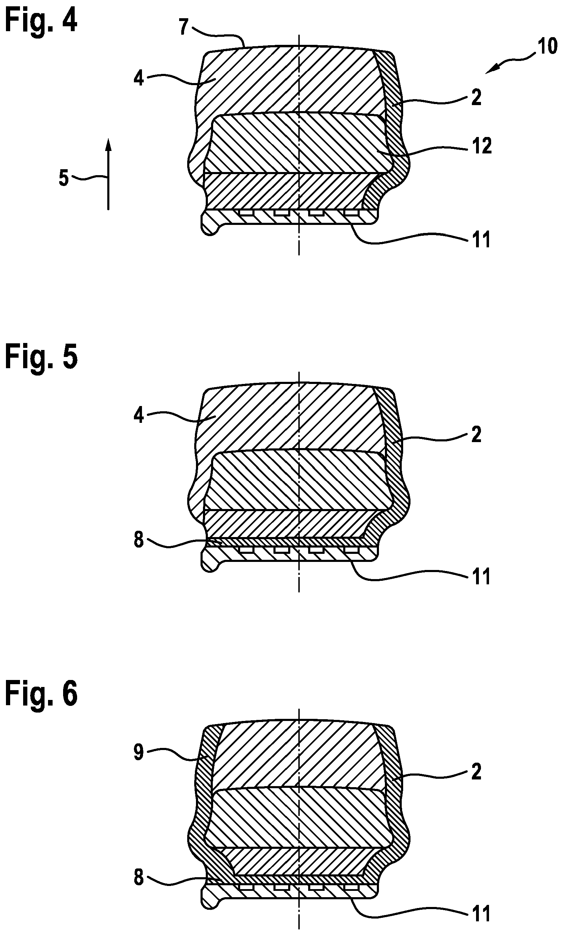

Die Fig. 4 zeigt ein weiteres Ausführungsbeispiel für einen sogenannten Superelastic-Reifen. Das äußere Reifenbauteil 4 besteht aus einer nichtkreidenden und einer elektrisch nichtleitfähigen Gummimischung. Das Seitenwandbauteil 2 mit der elektrisch leitfähigen Gummimischung erstreckt sich von der Oberseite 7 des Vollgummireifens bis zum untersten elektrisch leitfähigem Reifenbauteil 11, welches aus einer Gummimischung mit Rußmaterial besteht. Im Inneren des Superelastic-Reifens ist eine weiche Gummimischung 12 angeordnet.

Die Fig. 5 zeigt ein weiteres Ausführungsbeispiel für einen Superelastic-Reifen. Bei diesem Ausführungsbeispiel ist eine horizontale Materialschicht 8 mit einer elektrischleitfähigen Gummimischung oberhalb des untersten elektrisch leitfähigen Reifenbauteil 11 angeordnet. Die horizontale Materialschicht 8 ist mit dem Seitenwandbauteil 2 verbunden.

Die Fig. 6 zeigt ein weiteres Ausführungsbeispiel für einen Superelastic-Reifen. Bei diesem Ausführungsbeispiel sind sowohl die fahrzeuginnere als auch fahrzeugäußere Seite des Vollgummireifens mit einem Seitenwandbauteil 2 und einem Seitenwandbauteil 9 ausgestattet, die eine elektrische Ableitfähigkeit zum Fahrbahnuntergrund gewährleistet.

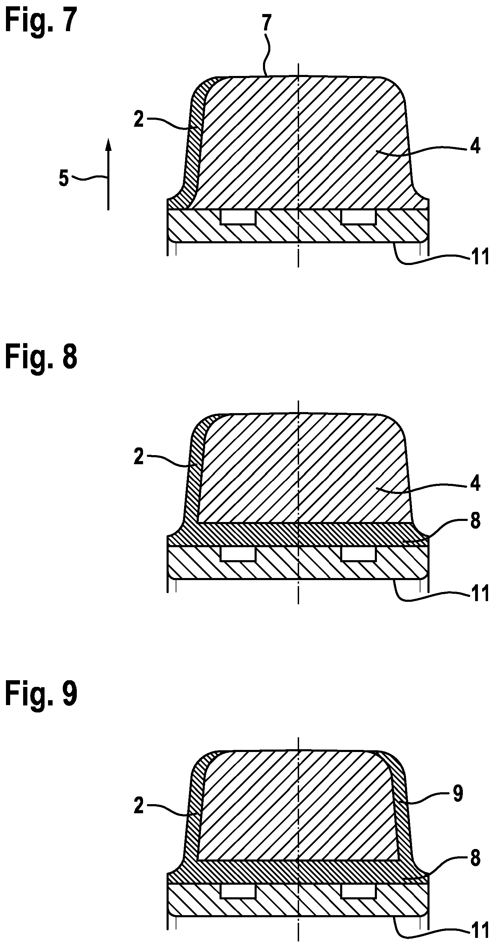

Die Fig. 7 zeigt ein Ausführungsbeispiel für einen Elastic-Reifen. Das äußere Reifenbauteil 4 besteht aus einer nichtkreidenden und einer elektrisch nicht leitfähigen Gummimischung. Das Seitenwandbauteil 2 mit der elektrisch leitfähigen Gummimischung erstreckt sich von der Oberseite 7 des Fahrzeugreifens bis zum untersten elektrisch leitfähigen Reifenbauteil 11, welches aus einer Gummimischung mit eine Rußmaterial besteht.

Die Fig. 8 zeigt ein weiteres Ausführungsbeispiel für einen Elastic-Reifen. Über dem untersten elektrisch leitfähigen Reifenbauteil 11 ist eine horizontale Materialschicht 8 mit einer elektrisch leitfähigen Gummimischung angeordnet. Diese horizontale Materialschicht 8 ist mit dem Seitenwandbauteil 2 verbunden.

Die Fig. 9 zeigt ein weiteres Ausführungsbeispiel, bei dem sowohl auf der fahrzeuginneren als auch auf der fahrzeugäußeren Seite des Fahrzeugreifens ein Seitenwandbauteil 2 und ein Seitenwandbauteil 9 mit einer elektrisch leitfähigen Gummimischung angeordnet ist. Die Reifenbauteile mit einer elektrisch leitfähigen Gummimischung weisen einen Ableitwiderstand von kleiner als 10 Millionen Ohm auf.

Die Materialdicke der Seitenwandbauteile 2 und 3 beträgt ca. 4 bis 5 mm.

### Bezugszeichenliste

### (ist Teil der Beschreibung)

1 Stahlbodenbandagen-Reifen
2 Seitenwandbauteil mit einer elektrisch leitfähigen Gummimischung auf der fahrzeuginneren Seite des Fahrzeugreifens
3 Stahlbodenbandage (unterstes elektrisch leitfähiges Reifenbauteil)
4 äußeres Reifenbauteil aus einer nichtkreidenden und einer elektrisch nicht leitfähigen Gummimischung
5 radiale Richtung
6 fahrzeuginnere Seite des Fahrzeugreifens
7 Oberseite des Fahrzeugreifens
8 horziontale Materialschicht mit einer elektrisch leitfähigen Gummimischung
9 Seitenwandbauteil mit einer elektrisch leitfähigen Gummimischung auf der fahrzeugäußeren Seite des Fahrzeugreifens
10 Superelastic-Reifen
11 unterstes elektrisch leitfähiges Reifenbauteil aus einer Gummimischung mit Russmaterial
12 weiche Gummimischung

## Patentansprüche

1. Fahrzeugreifen,
wobei der Fahrzeugreifen ein Vollgummireifen ist und mindestens ein Reifenbauteil (4) eine nichtkreidende Gummimischung umfasst,
wobei der Fahrzeugreifen einen in radialer Richtung (5) äußeren Reifenbauteil (4) aus einer nichtkreidenden und elektrisch nicht leitfähigen Gummimischung und einen in radialer Richtung (5) untersten elektrisch leitfähigen Reifenbauteil (3,11) aufweist,
**dadurch gekennzeichnet, dass**
auf mindestens einer Seitenwand des Fahrzeugreifens einen Seitenwandbauteil (2) mit einer elektrisch leitfähigen Gummimischung angeordnet ist,
wobei sich das Seitenwandbauteil (2) von der Oberseite (7) des Fahrzeugreifens bis zum untersten elektrisch leitfähigen Reifenbauteil (3, 11) erstreckt, wobei im Übergang zum untersten elektrisch leitfähigen Reifenbauteil (3,11) eine horizontale Materialschicht (8) mit einer elektrisch leitfähigen Gummimischung angeordnet ist, die mit dem Seitenwandbauteil (2) in Verbindung steht, und
wobei der Fahrzeugreifen ein Stahlbodenbandagen-Reifen (1) ist, wobei das unterste elektrisch leitfähige Reifenbauteil eine Stahlbodenbandage (3) ist.

2. Fahrzeugreifen nach Anspruch 1,
**dadurch gekennzeichnet, dass**
das Seitenwandbauteil (2) mit der elektrisch leitfähigen Gummimischung auf der fahrzeuginneren Seite angeordnet ist.

3. Fahrzeugreifen nach einem der vorhergehenden Ansprüche,
**dadurch gekennzeichnet, dass**
auf beiden Seiten des Fahrzeugreifens jeweils ein Seitenwandbauteil (2, 9) mit einer elektrisch leitfähigen Gummimischung angeordnet ist.

4. Fahrzeugreifen nach einem der vorhergehenden Ansprüche,
**dadurch gekennzeichnet, dass**
das Seitenwandbauteil (2, 9) eine mit Rußmaterial gefüllte Mischung ist mit der die elektrische Leitfähigkeit gewährleistet wird.

5. Fahrzeugreifen nach einem der vorhergehenden Ansprüche,
**dadurch gekennzeichnet, dass**
der Fahrzeugreifen ein Superelastic-Reifen ist, in dessen Inneren eine weiche Gummimischung angeordnet ist,
wobei das unterste elektrisch leitfähige Reifenbauteil (11) eine Gummimischung mit Russmaterial umfasst.

## Claims

1. Vehicle tyre,
the vehicle tyre being a solid rubber tyre and at least one tyre component (4) comprising a non-marking rubber compound,
the vehicle tyre having in the radial direction (5) an outer tyre component (4), of a non-marking and electrically non-conductive rubber compound, and having in the radial direction (5) a lowermost electrically conductive tyre component (3, 11), **characterized in that**
on at least one sidewall of the vehicle tyre there is arranged a sidewall component (2) with an electrically conductive rubber compound,
the sidewall component (2) extending from the upper side (7) of the vehicle tyre to the lowermost electrically conductive tyre component (3, 11),
and a horizontal material layer (8) with an electrically conductive rubber compound, which is in connection with the sidewall component (2), being arranged at the transition to the lowermost electrically conductive tyre component (3, 11), and wherein the vehicle tyre is a steel-based press-on band tyre (1), the lowermost electrically conductive tyre component being a steel-based press-on band (3) .

2. Vehicle tyre according to Claim 1,
**characterized in that**
the sidewall component (2) with the electrically conductive rubber compound is arranged on the inner side with respect to the vehicle.

3. Vehicle tyre according to one of the preceding claims,
**characterized in that**
a sidewall component (2, 9) with an electrically conductive rubber compound is respectively arranged on both sides of the vehicle tyre.

4. Vehicle tyre according to one of the preceding claims,
**characterized in that**
the sidewall component (2, 9) is a compound filled with carbon black material, with which the electrical conductivity is ensured.

5. Vehicle tyre according to one of the preceding claims,
**characterized in that**
the vehicle tyre is a superelastic tyre, in the interior of which a soft rubber compound is arranged, the lowermost electrically conductive tyre component (11) comprising a rubber compound with carbon black material.

## Revendications

1. Pneu de véhicule,
dans lequel le pneu de véhicule est un pneu plein et au moins un élément de pneu (4) comprend un mélange de caoutchouc non marquant,
dans lequel le pneu de véhicule présente un élément de pneu (4) extérieur dans la direction radiale (5) et composé d'un mélange de caoutchouc non marquant et électriquement non conducteur, et un élément de pneu (3, 11) électriquement conducteur, inférieur dans la direction radiale (5),
**caractérisé en ce qu'**un élément de flanc (2) comprenant un mélange de caoutchouc électriquement conducteur est disposé sur au moins un flanc du pneu de véhicule,
dans lequel l'élément de flanc (2) s'étend de la face supérieure (7) du pneu de véhicule jusqu'à l'élément de pneu inférieur (3, 11) électriquement conducteur,
et dans lequel une couche de matière horizontale (8) comprenant un mélange de caoutchouc électriquement conducteur et qui communique avec l'élément de flanc (2) est disposée au niveau de la transition à l'élément de pneu inférieur (3, 11) électriquement conducteur, et dans lequel le pneu de véhicule est un pneu à bandage sur frette acier (1), l'élément de pneu inférieur, électriquement conducteur, étant un bandage sur frette acier (3).

2. Pneu de véhicule selon la revendication 1, **caractérisé en ce que** l'élément de flanc (2) comprenant le mélange de caoutchouc électriquement conducteur est disposé sur le côté intérieur du véhicule.

3. Pneu de véhicule selon l'une quelconque des revendications précédentes, **caractérisé en ce qu'**un élément de flanc (2, 9) comprenant un mélange de caoutchouc électriquement conducteur est disposé sur les deux côtés du pneu de véhicule respectivement.

4. Pneu de véhicule selon l'une quelconque des revendications précédentes, **caractérisé en ce que** l'élément de flanc (2, 9) est un mélange chargé de matière de suie qui assure la conductivité électrique.

5. Pneu de véhicule selon l'une quelconque des revendications précédentes, **caractérisé en ce que** le pneu de véhicule est un pneu superélastique à l'intérieur duquel est disposé un mélange de caoutchouc souple, l'élément de pneu inférieur (11) électriquement conducteur comprenant un mélange de caoutchouc à matière de suie.
